# EUROPEAN PATENT APPLICATION

(11) **EP 0 886 367 A1**
(43) Date of publication of application: **23.12.1998**
(21) Application number: 98110886.3
(22) Date of filing: 15.06.1998
(51) Int. Cl.: H02K 15/09

(54) **Methods and apparatus for winding an armature**

(30) Priority: 20.06.1997 US 50387 P; 05.05.1998 US 73108
(71) Applicant: AXIS S.p.A., I-50028 Tavarnelle Val di Pesa (Firenze) (IT)
(72) Inventor: Luciani, Sabatino, 50019 Sensto Fiorentino, Firenze (IT)
(74) Representative: Lotti, Giorgio

(57) **Abstract**

An armature winding apparatus and method for winding coils of wire onto an armature defining an uneven number of radial slots. The apparatus has first and second flyers (110,111) for respectively winding first and second wires on the armature. First guide means are aligned with the first slot for guiding the first wire into the first slot. Second guide means are aligned with the second slot for guiding the second wire into the second slot. Third and fourth guide means (114',115') are aligned with the third slot for guiding the first and second wires into the third slot. The apparatus is configured to wind the first wire and maintain the second wire stationary, and to wind the second wire while maintaining the first winder stationary. This provides for consistent placement of wire coils on the armature.

## Description

### Background of the Invention

This invention relates to the manufacturing of electric motors and the like, and more particularly to methods and apparatus for winding wire coils onto armatures having an uneven number of slots.

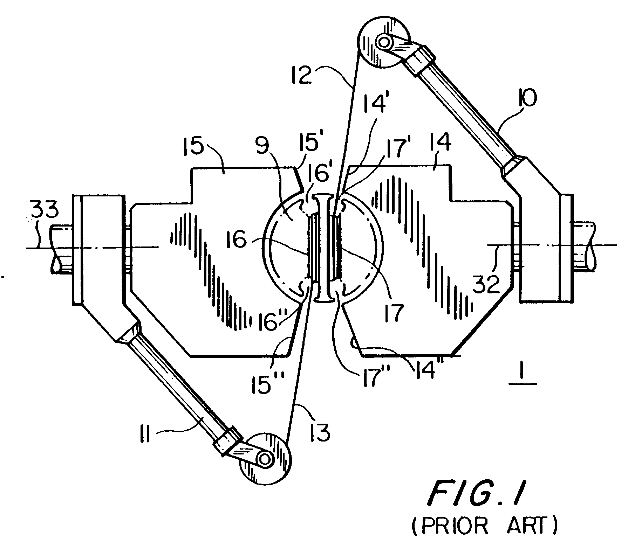

Typical prior art armature winding apparatus, such as flyer type winding apparatus 1 (FIG. 1), are constructed to wind coils on armatures having an even number of slots. The typical flyer-type winder includes two opposite flyers 10, 11 which can rotate about respective axes 32, 33 so that each of them dispenses an associated wire 12, 13 into a respective pair of coil receiving slots 16', 16'' and 17', 17'' of armature 9. Winding form 14 includes guide surface 14' aligned with slot 17', and guide surface 14'' aligned with slot 17''. Likewise, winding form 15 includes guide surface 15' aligned with slot 16', and guide surface 15'' aligned with slot 16''. The winding forms 14, 15 are used to guide each wire into the coil receiving slots as the wire leaves the associated flyer.

Formation of armature coils 16, 17 results from the winding of two wires 12, 13 into two pairs of slots 16', 16'' and 17', 17'' which are symmetrically opposite one another as shown in FIG. 1. The resulting armature coils 16, 17 are substantially parallel. In order to wind the coils such that the armature is nominally balanced, the two flyers 10, 11 are controlled to rotate at the same time so that each of them simultaneously forms a coil in respective pairs of slots. Rotation of the flyers in unison is performed such that both coils are wound simultaneously, and with the same number of turns.

Certain kinds of machine armatures are now constructed with an uneven number of slots. The prior art apparatus is unsuitable for winding this type of armature. The prior art winding forms are typically symmetrical with respect to opposite sides of the armature. Likewise, the pairs of winding forms are configured to guide the wire into two pairs of slots. For an armature design having an uneven number of slots, the wires would not be properly guided. Furthermore, the winders of the prior art apparatus are controlled to rotate in unison and simultaneously feed wire to a pair of slots. However, this simultaneous application of two wires to a common slot may result in undesirable wire twisting and inconsistent coil formation. These disadvantages of the prior art apparatus are amplified if heavier, larger diameter wires are used to wind the coils. For particularly large diameter wires, it may be impossible to pass two wires through a single slot simultaneously.

In view of the foregoing, it is an object of this invention to reduce or substantially eliminate the inconsistent coil forming characteristics of the prior art.

It is a further object to provide a method and apparatus for feeding wire to form coils on an armature having an uneven number of slots.

### Summary of the Invention

These and other objects are accomplished in accordance with the principles of this invention by the provision of an armature winding apparatus for winding two coils of wire onto an armature defining an uneven number of radial slots, the slots including at least a first slot, a second slot, and a third slot. The apparatus has a first winder for winding the first wire on the armature, and a second winder for winding the second wire on the armature. First guide means are aligned with the first slot for guiding the first wire into the first slot. Second guide means are aligned with the second slot for guiding the second wire into the second slot. Third and fourth guide means are aligned with the third slot for guiding the first and second wires into the third slot. The winding apparatus is preferably a flyer-type winder and the first and second winders are flyers rotatably mounted with respect to the armature and guide means. The first and third guide means are preferably guide surfaces on a first winding guide. The second and fourth guide means are preferably guide surfaces on a second winding guide.

In a preferred embodiment, a switch is provided for operating the first and second winders between a first condition wherein the second winder is stationary while the first winder winds the first wire, and a second condition wherein the first winder is stationary while the second winder winds the second wire.

A novel method is disclosed for winding coils onto an armature defining an uneven number of radial slots. The slots include at least a first slot, a second slot, and a third slot. The method comprises providing first and second winders for respectively winding first and second wires onto the armature. The first and third slots of the armature are aligned respectively with first and third wire guide means. The second and third slots of the armature are aligned respectively with second and fourth wire guide means. The first wire is wound into the first and third slots and the second winder is stationary, thereby forming a first coil. The second wire is then wound into the second and third slots and the first winder is preferably stationary, thereby forming a second coil partially overlapping the first coil in the third slot. The armature is rotated such that the above aligning steps and winding steps are repeated with the next ones of the armature slots.

### Brief Description of the Drawings

The above and other features of this invention, its nature, and various advantages will be apparent from the following detailed description of the preferred embodiments, taken in conjunction with the accompanying drawings, in which like reference characters represent like elements throughout, and in which:
FIG. 1 is a simplified elevational view of the prior art armature winding apparatus.
FIG. 2 is a simplified elevational view of illustrative armature winding apparatus which can be employed in the practice of this invention.

### Detailed Description of the Preferred Embodiments

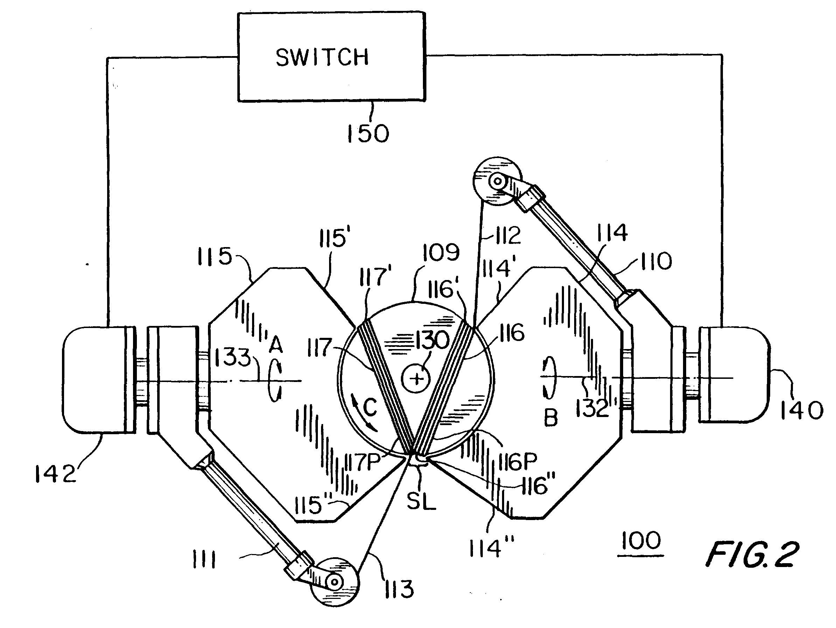

Referring now in detail to the drawings, a preferred embodiment of the subject winding apparatus 100 is illustrated in FIG. 2. Winding apparatus 100 is suitable for use in connection with armature 109, a component for a device such as an electric motor. Armature 109 defines longitudinal axis 130, about which armature 109 rotates when installed in a device. Axis 130 is substantially concentric with armature 109 and perpendicular to the plane of FIG. 2. Radial axes 132, 133 are substantially parallel to a radius of the armature. (It is contemplated that axes 132, 133 may be coincident.) A plurality of slots for the reception of wire are defined radially about the circumference of armature 109. Armature 109 preferably has an uneven number of slots, typically at least five. However, FIG. 2 illustrates only three slots, i.e. slots 116', 117' and 116''. Preferably, slots 116' and 117' are disposed substantially opposite to slot 116''.

Winding guides 114 and 115 are positioned adjacent slots in armature 109. Slot 116' is aligned with the upper portion 114' of winding guide 114, and slot 117' is aligned with upper portion 115' of winding guide 115. Slot 116'' is aligned with both lower portion 114'' of winding guide 114 and with lower portion 115'' of winding guide 115. (Although winding guides 14 and 15 are described having "upper" and "lower" portions, it is contemplated that the winding guides may be positioned in other relative configurations as well.)

Winders are preferably flyers 110 and 111 that are relatively moveable with respect to armature 109. More particularly, flyers 110, 111 are configured to rotate about radial axes 132, 133 respectively, as represented by arrows A, B. In an exemplary embodiment, winders 110, 112 are powered by winding motors 140, 142. During this motion, flyers 110 and 111 deliver wires 112 and 113 over winding guides 114 and 115, respectively, and into the slots of armature 109. In particular, wire 112 is directed into slots 116' and 116'' and forms coil 116. Similarly, wire 113 forms coil 117 within slots 117' and 116''. Coils 116 and 117 are wound such that respective coil portions 116P and 117P are adjacent each other and located in same slot 116''.

When winding the wires, particularly larger diameter wires, through a relatively narrow longitudinal slot opening SL of slot 116'' to form portions 116P and 117P of the respective coils 116 and 117, preferably one flyer of the two is rotated for a number of turns to form one coil (e.g., flyer 110 is rotated to form coil 116). During this time, the other flyer is kept stationary with its associated wire making the required connection with the armatures commutator (not shown), and thus no coil is formed thereby (e.g., while flyer 110 forms coil 116, flyer 111 remains stationary). Once the flyer has rotated to form the first coil sufficiently and is held stationary, the other flyer can then be rotated for the necessary number of turns to form the next coil (continuing with the above example, flyer 111 would then be rotated to form coil 117, while flyer 110 remains stationary). In this way, portions 116P and 117P will have their wire turns lay in slot 116'' adjacent each other and wound at different times. This facilitates the passage of the wires though slot opening SL when the flyers are rotated to form the coils and avoids twisting of the wires on each other. Such twisting may occur if the flyers were to be rotated simultaneously with respect to armature 109.

Application of the wires by two flyers 110 and 111 also has several advantages over the use of a single flyer. An apparatus with two flyers is more efficient than a single flyer because two coils may be wound before the position of the armature must be changed. Furthermore, differential winding by two armatures results in better placement of the wire in the slots and thus improved balance of the armature.

This differential winding may be accomplished by any of several ways. In one embodiment, flyers 110 and 111 are each provided with separate motors 140, 142 and switches. (Although a single switching mechanism 150 is illustrated in FIG. 2, it is contemplated that two or more switches are utilized.) To control the differential winding of coils 116 and 117, a first switch to control flyer 110 is turned on to wind coil 116, while a second switch is turned off to maintain flyer 111 stationary. Subsequently, the first switch to control flyer 110 is turned off while the second switch is turned on. Alternatively, it is contemplated that winder 100 is provided with a three position switch 150 that enables the operator to switch between a first position wherein only flyer 110 rotates and flyer 111 is stationary, a second position wherein only flyer 111 rotates and flyer 110 is stationary, and a third position wherein neither flyer rotates. It is further contemplated that software controls may be implemented to provide rotation of only one of flyers 110 and 111 at a time. It is further contemplated that winding apparatus 100 be operated such that both flyers 110 and 111 are simultaneously rotated to wind wires 112 and 113 for a portion of the winding process if required in the winding process.

Once coils 116 and 117 shown in FIG. 2 have been wound, armature 109 can be rotated about longitudinal axis 130 (in the direction of arrow C) to accomplish connection of the newly wound coils 116 and 117 to the commutator. Further rotation of armature 109 aligns other slots with winding guides 114 and 115 for reception of additional wire coils as described in the foregoing.

It will be understood that the foregoing is only illustrative of the principles of the invention, and that various modifications can be made by those skilled in the art without departing from the scope and spirit of the invention. For example, the sequence of some steps in the procedures that have been described are not critical and can be changed if desired. Moreover, although the invention has been illustrated in the context of flyer type winders, the invention is equally applicable to winders having other types of wire dispensing members.

## Claims

1. An armature winding apparatus for winding two coils of wire onto an armature defining an uneven number of radial slots, the slots comprising at least a first slot, a second slot, and a third slot, the apparatus comprising:
first winder for winding a first wire on the armature;
second winder for winding a second wire on the armature;
first guide means aligned with the first slot for guiding the first wire into the first slot;
second guide means aligned with the second slot for guiding the second wire into the second slot;
third and fourth guide means aligned with the third slot for guiding the first and second wires into the third slot; and
a switch configured to operate the first and second winders between a first condition wherein the first winder winds the first wire and the second winder is stationary, and a second condition wherein the first winder is stationary and the second winder winds the second wire.

2. An armature winding apparatus defined in claim 1, wherein the first and third guide means are guide surfaces disposed on a first winding guide.

3. An armature winding apparatus defined in claim 2, wherein the second and fourth guide means are guide surfaces on a second winding guide.

4. An armature winding apparatus defined in claim 1, wherein the first and second winders are first and second flyers rotatably mounted with respect to the armature and the guide means.

5. An armature winding apparatus for winding two coils of wire onto an armature defining an uneven number of radial slots, the slots comprising at least a first slot, a second slot, and a third slot, the armature winding apparatus comprising:
first and second winders for respectively winding the first and second wires on the armature;
first and third guide means respectively aligned with the first and third slots for guiding the first wire into the first and third slots, thereby forming a first coil;
second and fourth guide means respectively aligned with the second and third slots for guiding the second wire into the second and third slots, thereby forming a second coil, such that the first and second coil overlap in the third slot; and
a switch configured to operate the first and second winders between a first condition wherein the second winder is stationary while the first winder winds the first wire, and a second condition wherein the first winder is stationary while the second winder winds the second wire.

6. An armature winding apparatus defined in claim 5, wherein the first and third guide means are guide surfaces disposed on a first winding guide.

7. An armature winding apparatus defined in claim 6, wherein the second and fourth guide means are guide surfaces on a second winding guide.

8. An armature winding apparatus defined in claim 5, wherein the first and second winders are flyers rotatably mounted with respect to the armature and the guide means.

9. A method for winding coils onto an armature defining an uneven number of radial slots, the slots comprising at least a first slot, a second slot, and a third slot,
a) providing first and second winders for respectively winding first and second wires onto the armature;
b) aligning the first and third slots of the armature respectively with first and third wire guide means;
c) aligning the second and third slots of the armature respectively with second and fourth wire guide means;
d) winding the first wire into the first and third slots and maintaining the second winder stationary, thereby forming a first coil;
e) winding the second wire into the second and third slots, thereby forming a first coil partially overlapping the first coil in the third slot;
f) repeating steps (b) through (e) with subsequent ones of the uneven number of slots.

10. A method defined in claim 9, wherein the step of winding the second wire further includes:
maintaining the first winder stationary.
